(19) Europäisches Patentamt / European Patent Office / Office européen des brevets

(11) **EP 3 679 518 B1**

(12) **EUROPEAN PATENT SPECIFICATION**

(45) Date of publication and mention of the grant of the patent:
**24.07.2024 Bulletin 2024/30**

(21) Application number: **18853067.9**

(22) Date of filing: **03.09.2018**

(51) International Patent Classification (IPC):
*G06V 10/60* *(2022.01)*     *G06V 10/98* *(2022.01)*
*G06V 40/13* *(2022.01)*

(52) Cooperative Patent Classification (CPC):
**G06V 40/13; G06V 10/60; G06V 10/993**

(86) International application number:
**PCT/SE2018/050885**

(87) International publication number:
**WO 2019/050454 (14.03.2019 Gazette 2019/11)**

(54) **METHOD AND FINGERPRINT SENSING SYSTEM FOR DETERMINING THAT A FINGER COVERS A SENSOR AREA OF A FINGERPRINT SENSOR**

VERFAHREN UND FINGERABDRUCKERFASSUNGSSYSTEM ZUR BESTIMMUNG, DASS EIN FINGER EINEN SENSORBEREICH EINES FINGERABDRUCKSENSORS ABDECKT

PROCÉDÉ ET SYSTÈME DE DÉTECTION D'EMPREINTES DIGITALES PERMETTANT DE DÉTERMINER QU'UN DOIGT COUVRE UNE ZONE DE CAPTEUR D'UN CAPTEUR D'EMPREINTES DIGITALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2017 SE 1751086**

(43) Date of publication of application:
**15.07.2020 Bulletin 2020/29**

(73) Proprietor: **Fingerprint Cards Anacatum IP AB 411 19 Göteborg (SE)**

(72) Inventor: **BJERRE, Troels 2500 Valby (DK)**

(74) Representative: **Kransell & Wennborg KB P.O. Box 2096 403 12 Göteborg (SE)**

(56) References cited:
| | |
|---|---|
| US-A- 5 963 656 | US-A1- 2006 239 517 |
| US-A1- 2007 253 605 | US-A1- 2010 303 311 |
| US-A1- 2015 070 137 | US-A1- 2016 063 300 |
| US-A1- 2016 379 038 | US-A1- 2016 379 038 |
| US-A1- 2017 032 165 | US-A1- 2017 061 108 |
| US-A1- 2017 061 108 | |

## Description

## TECHNICAL FIELD

The present disclosure relates to a method and to a fingerprint sensing system for determining that a finger covers sensor area of a fingerprint sensor.

## BACKGROUND

Various types of biometric systems are used more and more in order to provide for increased security and/or enhanced user convenience.

In particular, fingerprint sensing systems have been adopted in, for example, consumer electronic devices, thanks to their small form factor, high performance and user acceptance.

Fingerprint sensors can sometimes get activated prematurely, before the finger has made proper contact with the fingerprint sensor, or unintentionally, by a finger or other body part making contact with the fingerprint sensor by mistake, unnecessarily using up power and processing resources. It is preferable that a fingerprint sensor is only activated when a finger makes proper contact with it. US2016379038 A1 discloses techniques for fingerprint quality assessment and valid fingerprint area recognition on a mobile device. Said techniques include subdividing an image of a fingerprint into sub-images. The sub-images can then be analysed to obtain, for example, dominant orientations and/or characteristic frequencies of fingerprint ridges or valleys within each of the sub-images.

US 2015/0070137 discloses a method using electric field sensors for determining whether a sufficient part of the fingerprint sensor is covered by a finger, and whether the finger is in stable contact. It is determined whether a threshold number of subarrays from at least three of five regions of the fingerprint sensor have acquired finger stability data indicative of a finger. Then it is determined whether the finger is stable based upon whether the threshold number of sub-arrays indicates stability over successive data acquisitions.

## SUMMARY

It is an objective of the present invention to provide an improved way of determining whether a finger covers the whole of a sensor area of a fingerprint sensor.

It has now been realised that it may be desirable to further ensure that the whole of a sensor area of the fingerprint sensor detection surface is properly covered by a finger before performing an action, e.g. for navigation actions, where not only certain points of the fingerprint are studied. Navigation actions may e.g. include pressure detection indicative of a push/click on a button or link or the like, and movement detection indicative of steering a pointer or the like, e.g. of a graphical user interface, GUI. Also for fingerprint authentication it may be advantageous that the whole sensor area is covered by the finger before performing an authentication action.

According to an aspect of the present invention, there is provided a method of determining that a finger covers a sensor area of a fingerprint sensor. The method comprises, on a surface of the fingerprint sensor, receiving a finger having a fingerprint topography. The method also comprises, by means of the fingerprint sensor, acquiring an image of the fingerprint of the received finger. The method also comprises dividing an image area of the acquired image, corresponding to the sensor area of the fingerprint sensor, into a plurality of image regions, said regions partly overlapping each other and covering the whole image area. The method also comprises, based on image analysis of each of the plurality of image regions, determining that the finger covers the whole sensor area.

According to another aspect of the present invention, there is provided a computer program product comprising computer-executable components for causing a fingerprint sensing system to perform an embodiment of the method of the present disclosure when the computer-executable components are run on processing circuitry comprised in the fingerprint sensing system.

According to another aspect of the present invention, there is provided a fingerprint sensing system comprising a fingerprint sensor, processing circuitry, and data storage storing instructions executable by said processing circuitry whereby said fingerprint sensing system is operative to, on a surface of the fingerprint sensor, receive a finger having a fingerprint topography. The fingerprint sensing system is also operative to, by means of the fingerprint sensor, acquire an image of the fingerprint of the received finger. The fingerprint sensing system is also operative to divide an image area of the acquired image, corresponding to a sensor area of the fingerprint sensor, into a plurality of image regions, said regions partly overlapping each other and covering the whole image area. The fingerprint sensing system is also operative to, based on image analysis of each of the plurality of image regions, determine that the finger covers the whole sensor area.

According to another aspect of the present invention, there is provided an electronic device comprising an embodiment of the fingerprint sensing system of the present disclosure, and a device control unit configured to interact with the fingerprint sensing system.

If it is only checked that a few separate parts of the sensor area are covered by a finger, nothing is known about whether the finger is covering also the sensor area between said parts. By dividing the image area, corresponding to the sensor area, into image regions which together cover the whole image area, the risk of not detecting non-covered parts of the sensor area is reduced. However, a non-covered part of the sensor area which extends over two adjacent, but not overlapping, image regions of the corresponding image area may still not trigger detection of the non-covered part since the non-covered part is divided between two or more regions, each only being affected to a relatively small degree. The solution of the present invention is to use overlapping regions, whereby there is increased probability that at least one of the regions is affected to such a degree that detection of the non-covered part is made by image analysis.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

## BRIEF DESCRIPTION OF THE DRAWINGS

Embodiments will be described, by way of example, with reference to the accompanying drawings, in which:

Fig 1 schematically illustrates an electronic device including a fingerprint sensing device, in accordance with an embodiment of the present invention.

Fig 2 is a schematic block diagram of the electronic device in figure 1.

Fig 3 schematically illustrates a time-sequence of images, in accordance with an embodiment of the present invention.

Fig 4 schematically illustrates an image area corresponding to a sensor area of fingerprint sensor, in accordance with an embodiment of the present invention.

Fig 5a illustrates an image area divided into overlapping image regions, in accordance with an embodiment of the present invention.

Fig 5b illustrates a representation of an uncovered sensor area part in overlapping image regions.

Fig 6 shows a time-sequence of grey-scale images, in accordance with an embodiment of the present invention.

Fig 7a is a schematic flow chart of an embodiment of the present invention.

Fig 7b is a schematic flow chart in more detail of a part of the flow chart of figure 7a.

## DETAILED DESCRIPTION

Embodiments will now be described more fully hereinafter with reference to the accompanying drawings, in which certain embodiments are shown. Rather, the following embodiments are provided by way of example so that this disclosure will be thorough and complete, and will fully convey the scope of the disclosure to those skilled in the art. Like numbers refer to like elements throughout the description.

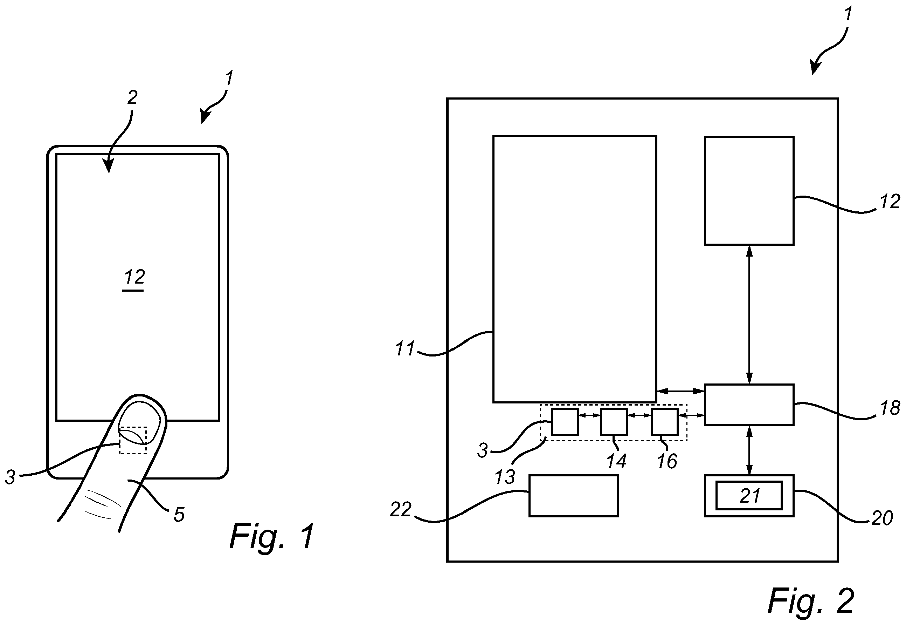

Figure 1 shows an electronic device 1, here in the form of mobile phone, e.g. smartphone, comprising a display 12 of a display stack 2, e.g. comprising touch functionality (i.e. a touch display 12) and a fingerprint sensor 3. The fingerprint sensor 3 comprises fingerprint sensor circuitry, e.g. for outputting a grey-scale image or the like where different intensities in the image indicate the contact between a detection surface of the fingerprint sensor 3 and a finger 5 placed there on, e.g. as part of fingerprint authentication or navigation using the fingerprint sensor.

The fingerprint sensor 3 may operate according to any sensing technology. For instance, the finger print sensor may be a capacitive, optical or ultrasonic sensor. Herein, a capacitive fingerprint sensor, which may be preferred for some applications, is discussed as an example. The fingerprint sensor may comprise a two-dimensional array of fingerprint sensing elements, each corresponding to a pixel of the image outputted by the fingerprint sensor, the pixel e.g. being represented by a grey-scale value. The fingerprint sensor may be located at a side of the display stack 2, outside of the display area of the display 12, as shown in figure 1. The outputted image may for instance be in the form of a two-dimensional or one-dimensional pixel array, e.g. of grey-scale values. Each image pixel may provide an image intensity, be it of a grey-scale value or other value. For example, for a capacitive fingerprint sensor, a high pixel intensity (e.g. white in grey-scale) implies low capacitive coupling and thus a large sensed distance between the detection surface and the fingerprint topography. A high pixel intensity may result because the finger does not cover the part of the detection surface where the sensing element corresponding to the pixel is located. Conversely, a low pixel intensity (e.g. black in grey-scale) implies high capacitive coupling and thus a small sensed distance between the detection surface and the fingerprint topography. A low pixel intensity may result because the corresponding sensing element is located at a ridge of the fingerprint topography. An intermediate pixel intensity may indicate that the sensing element is covered by the finger topology but is located at a valley of the fingerprint topography.

Referring to the block diagram in figure 2, the electronic device 1 in figure 1 comprises the display stack 2 comprising a touch sensor 11 and the display 12. The electronic device also comprises a fingerprint sensing system 13 comprising the fingerprint sensor 3, fingerprint image acquisition circuitry 14 and image processing circuitry 16. Further, the electronic device 1 comprises a data storage 20, e.g. in the form of a memory, which maybe shared between different components of the electronic device, such as the fingerprint sensing system 13. The data storage 20 holds software 21, in the form of computer-executable components corresponding to instructions, e.g. for the fingerprint sensing system 13. Thus, the data storage 20 may functionally at least partly be comprised in the fingerprint sensing system 13.

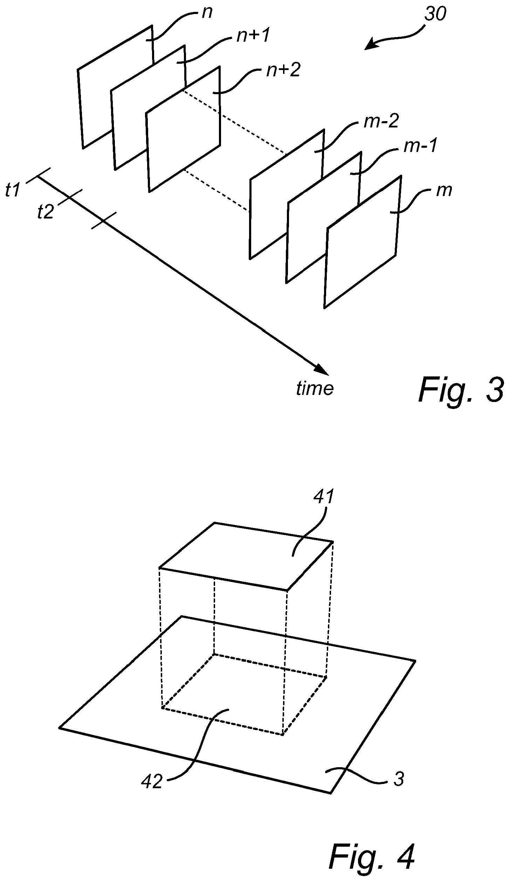

Accordingly (see also figures 3-5), embodiments of the fingerprint sensing system 13 comprises a fingerprint sensor 3, processing circuitry 16, and data storage 20 storing instructions 21 executable by said processing circuitry whereby said fingerprint sensing system is operative to, on a surface of the fingerprint sensor, receive a finger 5 having a fingerprint topography. The fingerprint sensing system is also operative to, by means of the fingerprint sensor, acquire an image n of the fingerprint of the received finger. The fingerprint sensing system is also operative to divide an image area 41 of the acquired image, corresponding to a sensor area 42 of the fingerprint sensor, into a plurality of image regions r, said regions partly overlapping each other and covering the whole image area. The fingerprint sensing system is also operative to, based on image analysis of each of the plurality of image regions, determine that the finger covers the whole sensor area.

In some embodiments, the fingerprint sensor 3 is a capacitive, ultrasonic or optical fingerprint sensor, e.g. a capacitive fingerprint sensor.

In some embodiments, the fingerprint sensor 3 is covered by a glass layer, e.g. by means of a cover glass or a glass coating, e.g. protecting the sensing elements and providing the detection surface of the fingerprint sensor.

The data storage 20 may be regarded as a computer program product 20 comprising computer-executable components 21 for causing the fingerprint sensing system 13 to perform an embodiment of the method of the present disclosure when the computer-executable components are run on processing circuitry 16 comprised in the fingerprint sensing system. Additionally, any mobile or external data storage means, such as a disc, memory stick or server may be regarded as such a computer program product.

The electronic device also comprises a device control unit 18 configured to control the electronic device 1 and to interact with the fingerprint sensing system 13. The electronic device also comprises a battery 22 for providing electrical energy to the various components of the electronic device 1.

Although not shown in figure 2, the electronic device may comprise further components depending on application. For instance, the electronic device 1 may comprise circuitry for wireless communication, circuitry for voice communication, a keyboard etc.

The electronic device 1 may be any electrical device or user equipment (UE), mobile or stationary, e.g. enabled to communicate over a radio channel in a communication network, for instance but not limited to e.g. mobile phone, tablet computer, laptop computer or desktop computer.

The electronic device 1 may thus comprise an embodiment of the fingerprint sensing system 13 discussed herein, and a device control unit 18 configured to interact with the fingerprint sensing system.

In some embodiments, the device control unit 18 is configured to interact with the fingerprint sensing system 13 such that a navigation input of the finger 5 detected by the fingerprint sensing system is detected as a command for control of the electronic device 1 by the device control unit.

As a finger 5 contacts a detection surface of the fingerprint sensor 3, the fingerprint sensor is activated to by means of the fingerprint image acquisition circuitry 14 acquire an image n, or a time-sequence 30 of images n to m (herein also denoted n..m) as illustrated in figure 3. Such a time-sequence 30 may comprise at least a first image n, taken at a first time point t1, and a second image n+1, taken at a second time point t2 which is in time domain after the first time point t1. Embodiments of the present invention may be applied to any of the images n..m, e.g. n, n+1, n+2, m-2, m-1 or m as shown in figure 3. If one of the images n..m is analysed and it is determined that the finger 5 is not covering the whole sensor area, the method may be applied to another of the images n..m.

Figure 4 illustrates how an image area 41 corresponds to a sensor area 42 of the detection surface of the fingerprint sensor 3. The image area 41 may be the whole or a part of the image n (or any of the images n..m), and may correspond to the whole or a part of the detection surface of the fingerprint detector 3. In the example of figure 4, the sensor area 42 is a sub-area of the detection surface, why the image area 41 comprises only pixels from a subgroup of the sensing elements of the fingerprint sensor, typically those sensing elements positioned right underneath the sensor area 42.

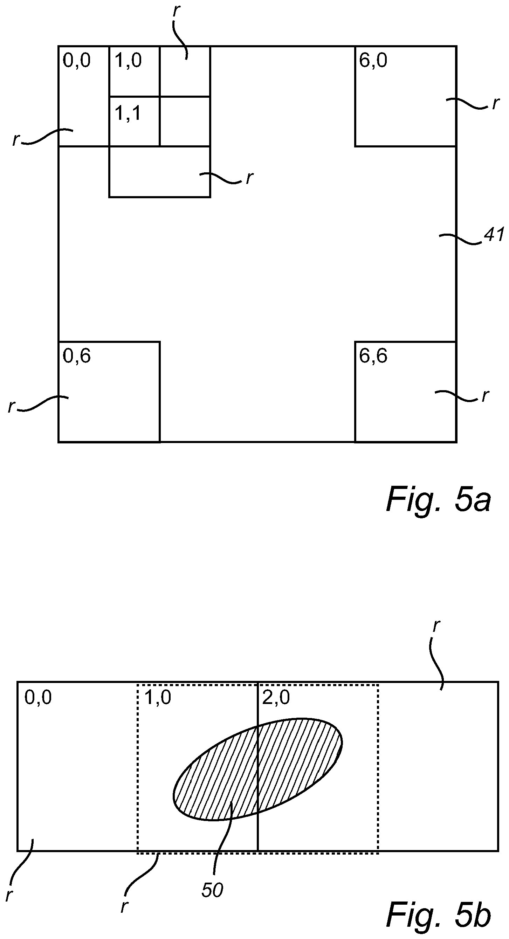

Figure 5a shows an example of an image area 41 which has been schematically divided into a plurality of image regions r. To not clutter the figure, only a few of the image regions which the image area is divided into are shown. Coordinates of each image region r is given in the upper left corner of each image region. Each image region is square, i.e. of 8x8 pixels, but any pixel ratio or number of pixels of each region r is possible. It may be convenient that all regions r are of the same size, but using different size regions may also be desirable in some embodiments. In the figure, the image area is divided into a total of 49 (7×7) image regions, with coordinates of 0 to 6 in each dimension, but any number of regions maybe used, e.g. 25 (5×5) or 81 (9×9) or more regions.

The regions r are overlapping. Each region r overlaps with neighbouring regions in both dimensions of a two-dimensional image area 41, e.g. by at least 20, 30, 40 or 50%. In the example of figure 5a, each image region r overlaps by 50% with each of its closest neighbour images, i.e. having integer coordinates in any one of the two dimensions which is higher or lower by one.

An advantage with overlapping regions r is illustrated by means of figure 5b, in which three of the regions r of figure 5a are shown. A high-intensity part 50 of the image area 41, corresponding to a non-covered part of the sensor area 42, is divided between the two non-overlapping regions r having the coordinates 0,0 and 2,0, respectively. Each of these two non-overlapping regions may only to a lesser degree comprise the high-intensity part 50, why an average intensity value of the region may not be affected by the high-intensity part to such a degree that detection of the high-intensity part, and thus the non-covered part, is triggered. However, by using a third region r, having the coordinates 1,0 in this example, which overlaps both of the 0,0 and 2,0 regions, here by 50% each, this third region may to a larger degree comprise the high-intensity part and be affected by the high-intensity part to such a degree that detection of the high-intensity part, and thus the non-covered part, is triggered.

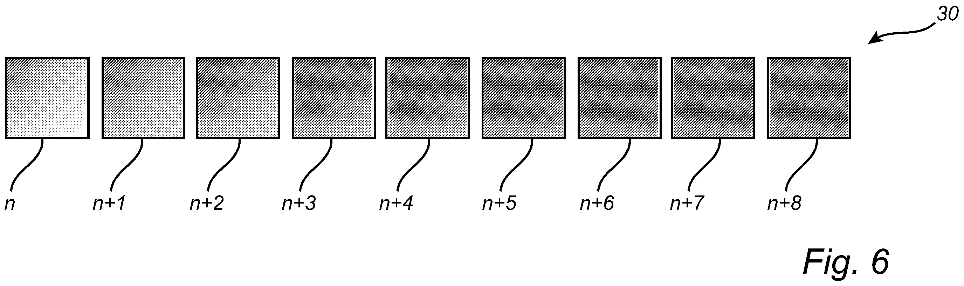

Figure 6 shows a time-sequence 30 of grey-scale $32 \times 32$ pixel images n to n+8 from a capacitive fingerprint sensor 3 after activation. The sequence 30 of figure 6 illustrates how a finger 5 is only partly in contact with the detection surface in the first images while being in stable contact over the whole sensor area in the last images. The sequence of figure 6 appears to show a finger which makes contact with the sensor 3 from the upper left corner.

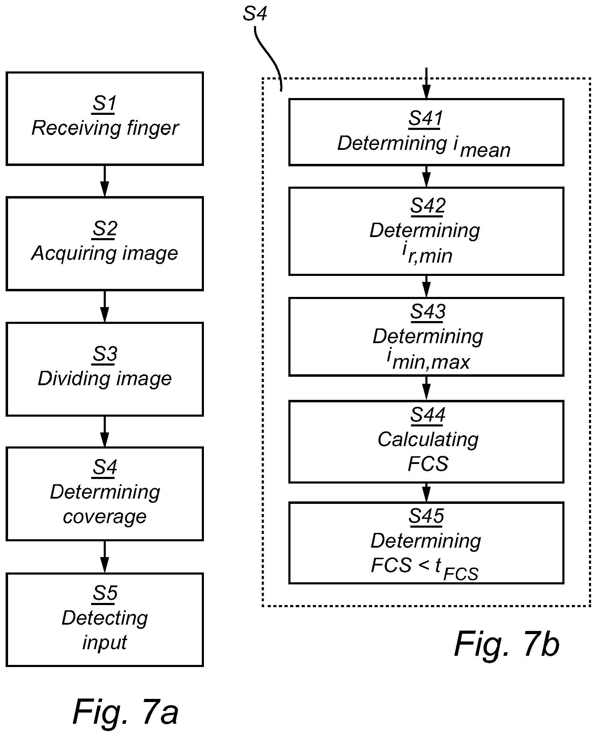

Figure 7a is a flow chart of an embodiment of the method of the present invention. On a detection surface of the fingerprint sensor 3, a finger having a fingerprint topography is received S1. Then, by means of the fingerprint sensor 3, an image n of the fingerprint of the received finger is acquired S2. The image may be any image n..m of a time-sequence 30 of images. An image area 41 of the acquired image n is divided S3 into a plurality of image regions r. The image area 41 corresponds to a sensor area 42 of the fingerprint sensor. The regions are partly overlapping each other and jointly cover the whole image area. Based on image analysis of each of the plurality of image regions, it is then determined S4 that the finger covers the whole sensor area of the fingerprint sensor.

In some embodiments, after the determining S4 that the finger 5 covers the whole sensor area 42, a navigation input from the finger is detected S5. The navigation input may e.g. be based on gesture recognition, which may for instance facilitate navigation in e.g. a menu or the like of a GUI. The detecting S5 of the navigation input may comprise detecting a pressure of the finger 5 against the sensor area 42 or detecting a movement of the finger 5 relative to the sensor area 42. As mentioned above, navigation actions may e.g. include pressure detection indicative of a selection, push/click on a button or link or the like, and movement detection indicative of steering a pointer or the like, e.g. of a GUI presented by the display stack 2. In other embodiments, an authentication operation may be triggered by the determining S4 that the finger 5 covers the whole sensor area 42.

In some embodiments, the determining S4 that the finger 5 covers the whole sensor area 42 comprises comparing an average intensity value $i_{mean}$ of the image area 41 with at least one intensity value $i_r$ of each of the image regions r. The average intensity value $i_{mean}$ of the image area may e.g. be an average grey-scale value of all pixels in the image area, or of groups of pixels in the image area. The at least one intensity value $i_r$ of each of the image regions r may e.g. be an average intensity value, a maximum intensity value or a minimum intensity value, e.g. of grey-scale values of all pixels in the image region, or of groups of pixels in the image region, preferably a minimum intensity value $i_{r,min}$ of each image region.

Figure 7b is a flow chart illustrating an example of how it can be determined S4 that the finger covers the whole sensor area by means of image analysis. An average intensity value $i_{mean}$ of the whole image area 41 is determined S41, e.g. an average grey-scale value over all pixels in the image area. For each of the image regions r, a minimum intensity value $i_{r,min}$ is determined S42, e.g. the lowest grey-scale value of all pixels in the region r. Then, a maximum value $i_{min,max}$ from the determined minimum intensity values for all regions r is determined S43, e.g. the highest grey-scale value there is among the lowest grey-scale value of each region (if this value is high, that means that, in at least one of the regions, none of the pixels is dark). The FCS is calculated S44 as the ratio between said maximum value and said average intensity value, i.e.

$$FCS = \frac{i_{min,max}}{i_{mean}}$$

. Then it can be determined S45 that the finger covers the sensor area when the FCS is below a predetermined threshold $t_{FCS}$, i.e. $FCS < t_{FCS}$. The FCS may for example be within the range of 0.5-0.9 when the finger covers the whole sensor area, e.g. the fingerprint topography is in contact with the detection surface over the whole sensor area. Thus, the threshold $t_{FCS}$ may conveniently be at least 0.9, e.g. within the range of 0.95-1.1

In some embodiments, the sensor area 42 covers the whole detection surface of the fingerprint sensor 3, i.e. the sensor area 42 is not a sub-area of the detections surface, whereby essentially all the sensing elements of the fingerprint sensor 3 are used to form pixels in the image area 41. In some other embodiments, the sensor area 42 covers only a part of the fingerprint sensor 3. It may e.g. be enough that the sensor area 42 covers only a part, such as 30, 50 or 70%, of the detection surface of the fingerprint sensor 3, e.g. depending on the size and/or resolution of the fingerprint sensor 3, in order to be enabled for an action, such as authentication and/or navigation as discussed herein.

In some embodiments, the determining S4 that the finger 5 covers the whole sensor area 42 comprises determining that the finger is in contact with the surface of the fingerprint sensor 3 over the whole sensor area. Although some sensor technologies, e.g. capacitive, may allow for fingerprint sensing also when the fingerprint topography hovers just above the detection surface, it may be convenient, e.g. for obtaining a stable image n, that the fingerprint topography, typically the ridges thereof, is in direct physical contact with the detection surface. The detection surface may be provided by e.g. a cover glass or glass coating of the fingerprint sensor 3, protecting the fingerprint sensing elements.

As also discussed with reference to figure 5a, in some embodiments of the present invention, an overlap between at least two, e.g. called a first region and a second region, of the plurality of image regions r is at least 20%, such as at least 30, 40 or 50%. Preferably, each of the plurality of regions r has an overlap with all its immediate neighbours in both dimensions.

The image regions r may have any shape or size, but each of the plurality of image regions r has size of at least 8x8 pixels of the acquired image n. In some embodiments, each of the plurality of image regions r corresponds to a sensor region, being a sub-area of the sensor area 42, having a size of at least 0.48 mm times 0.48 mm of the sensor area.

As previously mentioned, the acquired image n, e.g. any image n..m of an acquired time-sequence 30 of images, maybe a grey-scale image.

The present disclosure has mainly been described above with reference to a few embodiments. However, as is readily appreciated by a person skilled in the art, other embodiments than the ones disclosed above are equally possible within the scope of the present disclosure, as defined by the appended claims.

**Claims**

1. A method of determining that a finger (5) covers a sensor area (42) of a fingerprint sensor (3), the method comprising:

   on a detection surface of the fingerprint sensor, receiving (S1) a finger having a fingerprint topography;
   by means of the fingerprint sensor, acquiring (S2) an image (n) of the fingerprint of the received finger;
   dividing (S3) a two-dimensional image area (41) of the acquired image, corresponding to the sensor area (42) of the fingerprint sensor, into a plurality of image regions (r), said regions partly overlapping each other, such that each of the image regions overlaps with neighbouring image regions in both dimensions of the two-dimensional image area (41), and covering the whole image area, wherein each of the plurality of image regions (r) has a size of at least 8x8 pixels of the acquired (S2) image (n);
   based on image analysis of each of the plurality of image regions, determining (S4) that the finger covers the whole sensor area, comprising comparing an average intensity value ($i_{mean}$) of the image area (41) with at least one intensity value ($i_r$) of each of the image regions (r); and
   in response to the determining (S4) that the finger covers the whole sensor area, performing an action, e.g. a navigation action or an authentication action.

2. The method of claim 1, wherein each of the image regions (r) is square, e.g. of 8x8 pixels.

3. The method of any preceding claim, wherein the determining (S4) that the finger (5) covers the whole sensor area (42) comprises:

   determining (S41) an average intensity value ($i_{mean}$) of the image area (41);
   for each of the image regions (r), determining (S42) a minimum intensity value ($i_{r,min}$);
   determining (S43) a maximum value ($i_{min,max}$) from the determined minimum intensity values for all regions (r);
   calculating (S44) a finger contact score, FCS, as the ratio between said maximum value ($i_{min,max}$) and said average intensity value ($i_{mean}$); and
   determining (S45) that the finger covers the sensor area when the FCS is below a predetermined threshold ($t_{FCS}$).

4. The method of any preceding claim, wherein the overlap in both dimensions is at least 20%, such as at least 30, 40 or 50%.

5. The method of any preceding claim, wherein the performing of an action comprises detecting (S5) a navigation input from the finger.

6. The method of claim 5, wherein the detecting (S5) of the navigation input comprises detecting a pressure of the finger (5) against the sensor area (42) or wherein the detecting (S5) of the navigation input comprises detecting a movement of the finger (5) relative to the sensor area (42).

7. The method of any preceding claim, wherein the determining (S4) that the finger (5) covers the whole sensor area (42) comprises determining that the finger is in contact with the surface of the fingerprint sensor (3) over the whole sensor area.

8. The method of any preceding claim, wherein each of the plurality of image regions (r) corresponds to a sensor region having a size of at least 0.48 times 0.48 mm of the sensor area (42).

9. The method of any preceding claim, wherein the plurality of image regions (r) consists of at least 25 image regions, e.g. of at least 49 or 81 image regions.

10. A computer program product (20) comprising computer-executable components (21) for causing a fingerprint sensing system (13) to perform the method of any preceding claim when the computer-executable components are run on processing circuitry (16) comprised in the fingerprint sensing system.

11. A fingerprint sensing system (13) comprising:

    a fingerprint sensor (3);
    processing circuitry (16); and
    data storage (20) storing instructions (21) executable by said processing circuitry
    whereby said fingerprint sensing system is configured to perform the method of any claim 1-9.

12. The fingerprint sensing system of claim 11, wherein the fingerprint sensor (3) is a capacitive, ultrasonic or optical fingerprint sensor.

13. The fingerprint sensing system of claim 11 or 12, wherein the fingerprint sensor (3) is covered by a glass layer, e.g. by means of a cover glass or a glass coating.

14. An electronic device (1) comprising:

    the fingerprint sensing system (13) of any claim 11-13; and
    a device control unit (18) configured to interact with the fingerprint sensing system.

15. The electronic device of claim 14, wherein the device control unit (18) is configured to interact with the fingerprint sensing system (13) such that a navigation input of the finger (5) detected by the fingerprint sensing system is detected as a command for control of the electronic device (1) by the device control unit.

**Patentansprüche**

1. Verfahren zum Bestimmen, dass ein Finger (5) eine Sensorfläche (42) eines Fingerabdrucksensors (3) bedeckt, wobei das Verfahren umfasst:

auf einer Detektionsfläche des Fingerabdrucksensors, Empfangen (S1) eines Fingers, der eine Fingerabdrucktopografie aufweist;
mit Hilfe des Fingerabdrucksensors, Aufnehmen (S2) eines Bildes (n) des Fingerabdrucks des empfangenen Fingers;
Unterteilen (S3) eines zweidimensionalen Bildbereichs (41) des aufgenommenen Bildes, der der Sensorfläche (42) des Fingerabdrucksensors entspricht, in mehrere Bildregionen (r), wobei die Regionen einander teilweise überlappen, dergestalt, dass jede der Bildregionen mit benachbarten Bildregionen in beiden Dimensionen des zweidimensionalen Bildbereichs (41) überlappt und den gesamten Bildbereich bedeckt, wobei jede der mehreren Bildregionen (r) eine Größe von mindestens 8x8 Pixeln des aufgenommenen (S2) Bildes (n) hat;
auf der Grundlage einer Bildanalyse jeder der mehreren Bildregionen, Bestimmen (S4), dass der Finger die gesamte Sensorfläche bedeckt, was das Vergleichen eines durchschnittlichen Intensitätswertes ($i_{mean}$) des Bildbereichs (41) mit mindestens einem Intensitätswert ($i_r$) jeder der Bildregionen (r) umfasst; und
in Reaktion auf das Bestimmen (S4), dass der Finger die gesamte Sensorfläche bedeckt, Durchführen einer Aktion, zum Beispiel einer Navigationsaktion oder einer Authentifizierungsaktion.

2. Verfahren nach Anspruch 1, wobei jede der Bildregionen (r) quadratisch ist und zum Beispiel 8x8 Pixel aufweist.

3. Verfahren nach einem der vorangehenden Ansprüche, wobei das Bestimmen (S4), dass der Finger (5) die gesamte Sensorfläche (42) bedeckt, umfasst:

    Bestimmen (S41) eines durchschnittlichen Intensitätswertes ($i_{mean}$) des Bildbereichs (41);
    für jede der Bildregionen (r), Bestimmen (S42) eines minimalen Intensitätswertes ($i_{r,min}$);
    Bestimmen (S43) eines Maximalwertes ($i_{min,max}$) anhand der bestimmten minimalen Intensitätswerten für alle Regionen (r);
    Berechnen (S44) einer Fingerkontaktwertung (Finger Contact Score, FCS) als das Verhältnis zwischen dem Maximalwert ($i_{min,max}$) und dem durchschnittlichen Intensitätswert ($i_{mean}$); und
    Bestimmen (S45), dass der Finger die Sensorfläche bedeckt, wenn die FCS unter einer zuvor festgelegten Schwelle ($t_{FCS}$) liegt.

4. Verfahren nach einem der vorangehenden Ansprüche, wobei die Überlappung in beiden Dimensionen mindestens 20 %, wie zum Beispiel mindestens 30, 40 oder 50 %, beträgt.

**5.** Verfahren nach einem der vorangehenden Ansprüche, wobei das Durchführen einer Aktion das Detektieren (S5) einer Navigationseingabe von dem Finger umfasst.

**6.** Verfahren nach Anspruch 5, wobei das Detektieren (S5) der Navigationseingabe das Detektieren eines Drucks des Fingers (5) gegen die Sensorfläche (42) umfasst oder wobei das Detektieren (S5) der Navigationseingabe das Detektieren einer Bewegung des Fingers (5) relativ zu der Sensorfläche (42) umfasst.

**7.** Verfahren nach einem der vorangehenden Ansprüche, wobei das Bestimmen (S4), dass der Finger (5) die gesamte Sensorfläche (42) bedeckt, das Bestimmen umfasst, dass der Finger über die gesamte Sensorfläche mit der Oberfläche des Fingerabdrucksensors (3) in Kontakt steht.

**8.** Verfahren nach einem der vorangehenden Ansprüche, wobei jede der mehreren Bildregionen (r) einer Sensorregion mit einer Größe von mindestens 0,48 mal 0,48 mm der Sensorfläche (42) entspricht.

**9.** Verfahren nach einem der vorangehenden Ansprüche, wobei die mehreren Bildregionen (r) aus mindestens 25 Bildregionen, zum Beispiel aus mindestens 49 oder 81 Bildregionen, besteht.

**10.** Computerprogrammprodukt (20), das computerausführbare Komponenten (21) umfasst, um ein Fingerabdruck-Lesesystem (13) zu veranlassen, das Verfahren nach einem der vorangehenden Ansprüche durchzuführen, wenn die computerausführbaren Komponenten in einer Verarbeitungsschaltung (16) ausgeführt werden, die in dem Fingerabdruck-Lesesystem enthalten ist.

**11.** Fingerabdruck-Lesesystem (13), das umfasst:

einen Fingerabdrucksensor (3);
eine Verarbeitungsschaltung (16); und
einen Datenspeicher (20), der Instruktionen (21) speichert, die durch die Verarbeitungsschaltung ausgeführt werden können, wobei das Fingerabdruck-Lesesystem dafür konfiguriert ist, das Verfahren nach einem der Ansprüche 1-9 durchzuführen.

**12.** Fingerabdruck-Lesesystem nach Anspruch 11, wobei der Fingerabdrucksensor (3) ein kapazitiver, Ultraschall- oder optischer Fingerabdrucksensor ist.

**13.** Fingerabdruck-Lesesystem nach Anspruch 11 oder 12, wobei der Fingerabdrucksensor (3) durch eine Glasschicht, zum Beispiel mittels eines Deckglases oder eine Glasbeschichtung, bedeckt ist.

**14.** Elektronische Vorrichtung (1), die umfasst:

das Fingerabdruck-Lesesystem (13) nach einem der Ansprüche 11-13; und
eine Vorrichtungssteuereinheit (18), die dafür konfiguriert ist, mit dem Fingerabdruck-Lesesystem zu interagieren.

**15.** Elektronische Vorrichtung nach Anspruch 14, wobei die Vorrichtungssteuereinheit (18) dafür konfiguriert ist, mit dem Fingerabdruck-Lesesystem (13) so zu interagieren, dass eine Navigationseingabe des Fingers (5), die durch das Fingerabdruck-Lesesystem detektiert wird, als ein Befehl zum Steuern der elektronischen Vorrichtung (1) durch die Vorrichtungssteuereinheit detektiert wird.

**Revendications**

**1.** Procédé de détermination qu'un doigt (5) couvre une zone de capteur (42) d'un capteur d'empreintes digitales (3), le procédé comprenant :

sur une surface de détection du capteur d'empreintes digitales, la réception (S1), d'un doigt ayant une topographie d'empreintes digitales ;
au moyen du capteur d'empreintes digitales, l'acquisition (S2) d'une image (n) de l'empreinte digitale du doigt reçu ;
la division (S3) d'une zone d'image bidimensionnelle (41) de l'image acquise, correspondant à la zone de capteur (42) du capteur d'empreintes digitales, en une pluralité de régions d'image (r), lesdites régions se chevauchant partiellement, de sorte que chacune des régions d'image chevauche des régions d'image voisines dans les deux dimensions de la zone d'image bidimensionnelle (41), et couvrant toute la zone d'image, dans lequel chacune de la pluralité de régions d'image (r) présente une taille d'au moins 8x8 pixels de l'image (n) acquise (S2) ;
sur la base d'une analyse d'image de chacune de la pluralité de régions d'image, la détermination (S4) que le doigt couvre toute la zone de capteur, comprenant la comparaison d'une valeur d'intensité moyenne ($i_{mean}$) de la zone d'image (41) à au moins une valeur d'intensité ($i_r$) de chacune des régions d'image (r) ; et
en réponse à la détermination (S4) que le doigt couvre toute la zone de capteur, la réalisation d'une action, par exemple une action de navigation ou une action d'authentification.

**2.** Procédé selon la revendication 1, dans lequel chacune des régions d'image (r) est carrée, par exemple de 8x8 pixels.

**3.** Procédé selon l'une quelconque des revendications précédentes, dans lequel la détermination (S4) que le doigt (5) couvre toute la zone de capteur (42) comprend :

la détermination (S41) d'une valeur d'intensité moyenne ($i_{mean}$) de la zone d'image (41) ;

pour chacune des régions d'image (r), la détermination (S42) d'une valeur d'intensité minimale ($i_{r,min}$) ;

la détermination (S43) d'une valeur maximale ($i_{min,max}$) à partir des valeurs d'intensité minimales déterminées pour toutes les régions (r) ;

le calcul (S44) d'un score de contact de doigt, FCS, en tant que le rapport entre ladite valeur maximale ($i_{min,max}$) et ladite valeur d'intensité moyenne ($i_{mean}$) ; et

la détermination (S45) que le doigt couvre la zone de capteur lorsque le FCS est inférieur à un seuil prédéterminé ($t_{FCS}$).

**4.** Procédé selon l'une quelconque des revendications précédentes, dans lequel le chevauchement dans les deux dimensions est d'au moins 20 %, tel qu'au moins 30, 40 ou 50 %.

**5.** Procédé selon l'une quelconque des revendications précédentes, dans lequel la réalisation d'une action comprend la détection (S5) d'une entrée de navigation à partir du doigt.

**6.** Procédé selon la revendication 5, dans lequel la détection (S5) de l'entrée de navigation comprend la détection d'une pression du doigt (5) contre la zone de capteur (42) ou dans lequel la détection (S5) de l'entrée de navigation comprend la détection de mouvement du doigt (5) par rapport à la zone de capteur (42) .

**7.** Procédé selon l'une quelconque des revendications précédentes, dans lequel la détermination (S4) que le doigt (5) couvre toute la zone de capteur (42) comprend la détermination que le doigt est en contact avec la surface du capteur d'empreintes digitales (3) sur toute la zone de capteur.

**8.** Procédé selon l'une quelconque des revendications précédentes, dans lequel chacune de la pluralité de régions d'image (r) correspond à une région de capteur présentant une taille d'au moins 0,48 fois 0,48 mm de la zone de capteur (42).

**9.** Procédé selon l'une quelconque des revendications précédentes, dans lequel la pluralité de régions d'image (r) se compose d'au moins 25 régions d'image, par exemple d'au moins 49 ou 81 régions d'image.

**10.** Produit programme informatique (20) comprenant des composants exécutables par ordinateur (21) pour amener un système de détection d'empreintes digitales (13) à réaliser le procédé selon l'une quelconque des revendications précédentes lorsque les composants exécutables par ordinateur sont exécutés sur une circuiterie de traitement (16) comprise dans le système de détection d'empreintes digitales.

**11.** Système de détection d'empreintes digitales (13) comprenant :

un capteur d'empreintes digitales (3) ;

une circuiterie de traitement (16) ; et

un stockage de données (20) stockant des instructions (21) exécutables par ladite circuiterie de traitement de telle manière que ledit système de détection d'empreintes digitales soit configuré pour réaliser le procédé selon l'une quelconque des revendications 1 à 9.

**12.** Système de détection d'empreintes digitales selon la revendication 11, dans lequel le capteur d'empreintes digitales (3) est un capteur d'empreintes digitales capacitif, ultrasonique ou optique.

**13.** Système de détection d'empreintes digitales selon la revendication 11 ou 12, dans lequel le capteur d'empreintes digitales (3) est couvert par une couche de verre, par exemple au moyen d'un verre de recouvrement ou d'un revêtement de verre.

**14.** Dispositif électronique (1) comprenant :

le système de détection d'empreintes digitales (13) selon l'une quelconque des revendications 11 à 13 ; et

une unité de commande de dispositif (18) configurée pour interagir avec le système de détection d'empreintes digitales.

**15.** Dispositif électronique selon la revendication 14, dans lequel l'unité de commande de dispositif (18) est configurée pour interagir avec le système de détection d'empreintes digitales (13) de sorte qu'une entrée de navigation du doigt (5) détectée par le système de détection d'empreintes digitales soit détectée en tant qu'une commande pour commander le dispositif électronique (1) par l'unité de commande de dispositif.

Fig. 2

Fig. 1

Fig. 3

Fig. 4

Fig. 5a

Fig. 5b

30

n+8

n+7

n+6

n+5

n+4

n+3

n+2

n+1

n

*Fig. 6*

S4

S1
Receiving finger

S2
Acquiring image

S3
Dividing image

S4
Determining
coverage

S5
Detecting
input

Fig. 7a

S41
Determining $i_{mean}$

S42
Determining
$i_{r,min}$

S43
Determining
$i_{min,max}$

S44
Calculating
FCS

S45
Determining
FCS $< t_{FCS}$

Fig. 7b

**EP 3 679 518 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016379038 A1
- US 20150070137 A